# EUROPÄISCHE PATENTSCHRIFT

(11) **EP 3 663 254 B1**
(45) Veröffentlichungstag und Bekanntmachung des Hinweises auf die Patenterteilung: **01.03.2023**
(21) Anmeldenummer: 19203735.6
(22) Anmeldetag: 17.10.2019
(51) Int. Cl.: B67B 3/20

(54) **VORRICHTUNG UND VERFAHREN ZUM VERSCHLIESSEN EINER FLASCHE MIT DREHMOMENTMESSUNG**
DEVICE AND METHOD FOR CLOSING A BOTTLE WITH TORQUE MEASUREMENT
DISPOSITIF ET PROCÉDÉ DE FERMETURE D'UNE BOUTEILLE AVEC MESURE DE COUPLE

(30) Priorität: 05.12.2018 DE 102018221034
(43) Veröffentlichungstag der Anmeldung: 10.06.2020
(73) Patentinhaber: KRONES Aktiengesellschaft, 93073 Neutraubling (DE)
(72) Erfinder: EHRISMANN, Tobias, 93073 Neutraubling (DE); SCHOENFELDER, Markus, 93073 Neutraubling (DE)
(74) Vertreter: Grünecker Patent- und Rechtsanwälte PartG mbB

(56) Entgegenhaltungen:
- WO-A1-2009/130657
- DE-A1- 4 217 461
- DE-A1-102007 057 284
- DE-U1- 9 419 402
- US-A- 4 614 077

## Beschreibung

### Gebiet der Erfindung

Die Erfindung betrifft eine Vorrichtung zum Haltern einer zu verschließenden Flasche, die ein Halteelement zum in Bezug auf das Haltelement drehfesten Haltern eines Halsrings der zu verschließenden Flasche und ein Befestigungselement zum Befestigen des Halteelements an einer Flaschenverschließvorrichtung oder an einer Flaschentransportvorrichtung umfasst. Weiterhin betrifft die Erfindung eine Vorrichtung zum Verschließen einer Flasche und ein Verfahren zum Verschließen einer Flasche.

### Stand der Technik

Eine gattungsgemäße Vorrichtung zum Haltern einer zu verschließenden Flasche ist aus EP 2 653 436 A1 bekannt, insbesondere für Kunststoffflaschen. Dabei wird eine sogenannte Spikeplatte eingesetzt, die während des Aufschraubens des Deckels mittels an der Spikeplatte vorgesehen Spitzen die Flasche an einem Halsring der Flasche verdrehsicher fixiert. Beispielsweise sind die Spitzen an der Oberseite der Spikeplatte angeordnet, und die Unterseite des Halsrings wird auf die Spitzen der Spikeplatte aufgesetzt und falls erforderlich wird der Halsring in Richtung der Spitzen angedrückt.

DE 10 2007 057284 A1 beschreibt eine Vorrichtung zum Öffnen oder Verschließen von Behältnissen mittels Schraubverschlüssen, wobei diese Vorrichtung einen Verschließkopf für das Greifen und Verdrehen des Schraubverschlusses gegenüber dem Behältnis aufweist.

Beim Verschließprozess ist es von Vorteil, ein definiertes und konstantes Verschließmoment aufbringen zu können. Dies verringert die Anzahl an fehlerhaft verschlossenen Behältern. Um Aufschluss über das auf den Verschluss einwirkende Drehmoment zu erhalten, ist es bekannt, die Stromaufnahme des Antriebs, der die Deckel auf die Flaschen schraubt, zu erfassen.

Reibungseffekte, Temperatureinflüsse und andere Faktoren wie zum Beispiel die in senkrechter Richtung wirkende Aufsetzkraft können jedoch das Verschließmoment deutlich vom motorseitig bereitgestellten Antriebsmoment abweichen lassen. Somit kann durch die aktuelle Methode keine verlässliche und genaue Aussage zum tatsächlich auf den Verschluss einwirkende Drehmoment getroffen werden.

### Beschreibung der Erfindung

Aufgabe der Erfindung ist es, die genannten Nachteile zumindest teilweise zu überwinden.

Die Aufgabe wird durch eine Vorrichtung nach Patentanspruch 1 gelöst.

Die erfindungsgemäße Vorrichtung zum Haltern einer zu verschließenden Flasche umfasst ein Halteelement zum in Bezug auf das Haltelement drehfesten Haltern eines Halsrings der zu verschließenden Flasche und ein Befestigungselement zum Befestigen des Halteelements an einer Flaschenverschließvorrichtung oder an einer Flaschentransportvorrichtung und ist gekennzeichnet durch einen Drehmomentsensor zur Erfassung eines zwischen dem Halteelement und dem Befestigungselement wirkenden Drehmoments.

Die erfindungsgemäße Vorrichtung hat den Vorteil, dass bei einem Verschließvorgang, bei dem ein Deckel auf eine mit dem Halteelement einer am Halsring gehalterten Flasche aufgeschraubt wird, durch die Erfassung des Drehmoments zwischen dem Haltelement und dem Befestigungselement eine genaue Information hinsichtlich des zwischen dem Deckel und der Flasche wirkenden Verschließmoments bereitgestellt wird.

Das Halteelement verhindert während des Verschließens einer Flasche (Aufschrauben eines Deckels) eine Drehung der Flasche relativ zum Haltelement. Dazu kann die Halteplatte beispielsweise in Form der oben beschriebenen Spikeplatte ausgebildet sein. Nach einem anderen Beispiel kann der Halsring einer Flasche über einen Klemmmechanismus der Halteplatte mit der Halteplatte gekoppelt werden, um eine relative Drehung zueinander zu verhindern.

Die erfindungsgemäße Vorrichtung kann wie folgt weitergebildet werden.

Das Halteelement und das Befestigungselement können mittels wenigstens einem Verbindungselement miteinander verbunden sein, und das zwischen dem Halteelement und dem Befestigungselement wirkende Drehmoment kann somit über das wenigstens eine Verbindungselement übertragen werden.

Das wenigstens eine Verbindungselement kann eine drehelastische Verbindung zwischen dem Halteelement und dem Befestigungselement bereitstellen. Mit einer drehelastischen Verbindung ist gemeint, dass die Verbindung zwischen dem Halteelement und dem Befestigungselement derart ausgebildet ist, dass eine durch ein anliegendes Drehmoment bewirkte Verdrehung des Halteelements in Bezug auf das Befestigungselement und dadurch hervorgerufene Verformung des wenigstens einen Verbindungselements eine federnde Rückstellkraft bzw. ein Gegenmoment bereitstellt. Wenn ein am Deckel anliegendes Verschließmoment wieder auf Null reduziert wird, erfolgt eine Rückstellung der Verdrehung in die Ausgangslage.

Das wenigstens eine Verbindungselement kann einen oder mehrere Stege zwischen dem Haltelement und dem Befestigungselement umfassen. Diese Stege können insbesondere die alleinige Verbindung zwischen dem Halteelement und dem Befestigungselement darstellen. Diese Stege können sich elastisch verformen und das Maß der Verformung (bzw. der daraus resultierenden Verdrehung) kann als Maß für das zwischen Halteelement und Befestigungselement anliegende Drehmoment verwendet werden.

Der Drehmomentsensor hat ein in Bezug auf das Halteelement drehfestes Zeigerelement und eine Erfassungseinrichtung zur Erfassung eines Ausschlags des Zeigerelements. Dies ermöglicht die Verdrehung über das Zeigerelement bzw. dessen Endbereich herauf zu skalieren, um die Erfassung der Verdrehung zu vereinfachen und sensibler zu gestalten.

Die Erfassungseinrichtung kann bevorzugt am Befestigungselement vorgesehen sein. Auf diese Weise kann der Ausschlag aufgrund der Verdrehung des Zeigerelements unmittelbar proportional dazu erfasst werden.

In einer anderen Weiterbildung kann das Zeigerelement ein Magnetelement umfassen und die Erfassungseinrichtung kann einen Magnetfeldsensor aufweisen.

Schließlich sieht eine weitere Ausgestaltung der Erfindung vor, dass auch die senkrecht auf die Flasche beim Aufschrauben wirkende Andrückkraft, die in senkrechter Richtung wirkt, gemessen wird. Dazu kann z.B. entweder ein separater Sensor z.B. zwischen den Spikes so angeordnet und dimensioniert werden, dass er die Andrückkraft messen kann, oder es kann auch z.B. das Zeigerelement so ausgebildet sein, dass es auch vertikal wirkende Kräfte messen kann.

Die Erfindung stellt auch eine Vorrichtung zum Verschließen einer Flasche bereit, die eine erfindungsgemäße Vorrichtung zum Haltern der zu verschließenden Flasche oder eine der oben genannten Weiterbildungen und eine Regeleinrichtung zum Regeln eines Verschließmoments, das auf einen auf die Flasche aufzuschraubenden Deckel wirkt, basierend auf einem vom Drehmomentsensor ausgegebenen Signal, umfasst.

Die Regeleinrichtung kann dazu ausgebildet sein, das Verschließmoment zu reduzieren, wenn das Signal einen vorbestimmten Grenzwert erreicht oder überschreitet. Somit kann ein definiertes Verschließmoment bereitgestellt werden, dass einerseits nicht zu hoch ist, so dass ein "Überdrehen" des Deckels vermieden wird, und andererseits nicht zu niedrig ist, so dass ein nicht ausreichendes Verschließen der Flasche durch den Deckel vermieden wird.

Die oben genannte Aufgabe wird weiterhin durch ein Verfahren gemäß Patentanspruch 10 gelöst.

Das erfindungsgemäße Verfahren zum Verschließen einer Flasche umfassend die Schritte: Haltern eines Halsrings der zu verschließenden Flasche mit einem ein Halteelement, wobei das Haltern in Bezug auf das Halteelement drehfest erfolgt, und wobei das Halteelement mit einem Befestigungselement an einer Flaschenverschließvorrichtung befestigt ist; und es ist gekennzeichnet durch den Schritt des Erfassens eines zwischen dem Halteelement und dem Befestigungselement wirkenden Drehmoments.

Die Vorteile des erfindungsgemäßen Verfahrens entsprechen jenen der erfindungsgemäßen Vorrichtung oder deren Weiterbildungen, weshalb diese hier nicht nochmals wiederholt werden sondern auf die obigen Ausführungen Bezug genommen wird.

Das erfindungsgemäße Verfahren kann wie folgt weitergebildet werden.

Es kann der weitere Schritt des Regelns eines Verschließmoments, das auf einen auf die Flasche aufzuschraubenden Deckel wirkt, basierend auf einem Signal, das von einem das Drehmoment erfassenden Drehmomentsensor ausgegeben wird, vorgesehen sein.

Das Regeln kann ein Reduzieren des Verschließmoments, wenn das Signal einen vorbestimmten Grenzwert erreicht oder überschreitet, umfassen.

Das Erfassen des Drehmoments umfasst das Erfassen einer Verdrehung des Halteelements in Bezug auf das Befestigungselement.

Das Erfassen der Verdrehung umfasst ein Erfassen der Lageänderung eines am Halteelement angeordneten Zeigerelements.

Das Erfassen der Lageänderung des Zeigerelements kann ein Erfassen eines Magnetfelds eines am Zeigerelement angeordneten Magnetelements mit einem am Halteelement angeordneten Magnetfeldsensor umfassen.

Weitere Merkmale und beispielhafte Ausführungsformen sowie Vorteile der vorliegenden Erfindung werden nachfolgend anhand der Zeichnung näher erläutert. Es versteht sich, dass diese Ausführungsform nicht den gesamten Bereich der vorliegenden Erfindung erschöpfen kann. Es versteht sich weiterhin, dass einige oder sämtliche der im Weiteren beschriebenen Merkmale auch auf andere Weise miteinander kombiniert werden können.

### Kurzbeschreibung der Zeichnungen

- Fig. 1 A, B: zeigt eine Ausführungsform der erfindungsgemäßen Vorrichtung zum Haltern einer zu verschließenden Flasche.
- Fig. 2: zeigt eine Ausführungsform der erfindungsgemäßen Vorrichtung zum Verschließen einer Flasche.

### Ausführungsformen

Die angegebenen Bezugszeichen betreffen alle Figuren, so dass gleiche Bezugszeichen gleiche Komponenten darstellen.

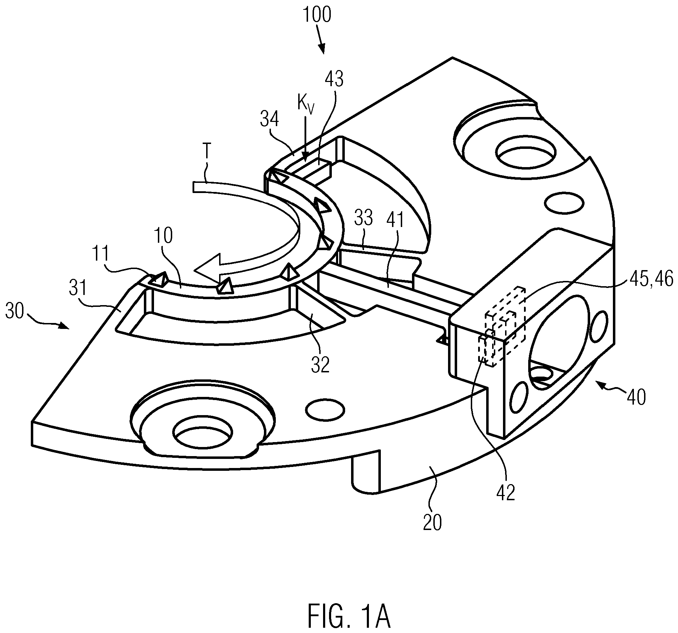

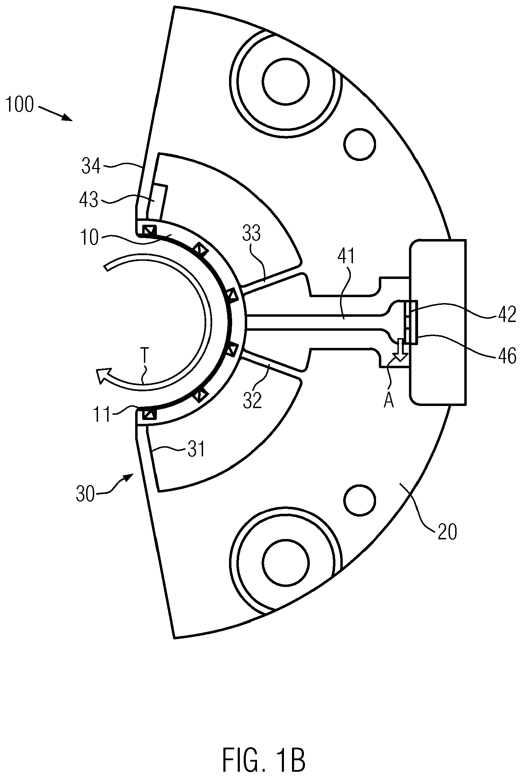

Figur 1 A, B zeigt eine Ausführungsform der erfindungsgemäßen Vorrichtung zum Haltern einer zu verschließenden Flasche.

Die beispielhafte erfindungsgemäße Vorrichtung 100 zum Haltern einer zu verschließenden Flasche umfasst ein Halteelement 10 und ein Befestigungselement 20 zum Befestigen des Halteelements 10 an einer Flaschenverschließvorrichtung oder an einer Flaschentransportvorrichtung. Das Halteelement 10 dient dem Haltern eines Halsrings der zu verschließenden Flasche, wobei das Haltern in Bezug auf das Haltelement 10 drehfest erfolgt. Weiterhin ist bei erfindungsgemäße Vorrichtung 100 ein Drehmomentsensor 40 zur Erfassung eines zwischen dem Halteelement 10 und dem Befestigungselement 20 wirkenden Drehmoments.

Das Halteelement 10 und das Befestigungselement 20 sind mittels wenigstens einem Verbindungselement 30 miteinander verbunden, wodurch das zwischen dem Halteelement 10 und dem Befestigungselement 20 wirkende Drehmoment lediglich über das wenigstens eine Verbindungselement 30 übertragen wird.

Ein an dem Halteelement 10 anliegendes Drehmoment T (Pfeilrichtung), das aufgrund eines an einem aufgeschraubten Deckel anliegenden Verschließmoments erzeugt und über den Halsring der Flasche auf das Halteelement 10 übertragen wird, wirkt auch zwischen dem Halteelement 10 und dem Befestigungselement 20.

Das wenigstens eine Verbindungselement 30 stellt eine drehelastische Verbindung zwischen dem Halteelement 10 und dem Befestigungselement 20 bereitstellt. Das wenigstens eine Verbindungselement 30 umfasst einen oder mehrere Stege 31-34 (in diesem Beispiel die 4 Stege 31-34) zwischen dem Haltelement 10 und dem Befestigungselement 20.

Der Drehmomentsensor 40 umfasst ein in Bezug auf das Halteelement 10 drehfestes Zeigerelement 41 und eine Erfassungseinrichtung 45 zur Erfassung eines Ausschlags A des Zeigerelements, wobei die Erfassungseinrichtung 45 am Befestigungselement 20 vorgesehen ist. In dieser Ausführungsform umfasst das Zeigerelement 41 ein Magnetelement 42, und die Erfassungseinrichtung 45 weist einen Magnetfeldsensor 46 auf.

Das Halteelement 10, das Befestigungselement 20 und die Stege 31-34 können in dieser Ausführungsform einstückig aus Metall ausgebildet sein. Weiterhin kann zusätzlich oder alternativ auch das Zeigerelement 41 einstückig mit dem Halteelement 10 ausgebildet sein. Das Zeigerelement 41 kann jedoch auch an das Halteelement 10 angeklebt oder angeschraubt sein.

Das Halteelement 10 verhindert während des Verschließens einer Flasche (Aufschrauben eines Deckels) eine Drehung der Flasche relativ zum Haltelement 10. In dieser Ausführungsform ist die Halteplatte 10 beispielhaft als sogenannte Spikeplatte ausgebildet und weist spitze Elemente 11 (Spikes) auf der Oberseite des Halteelements auf, die mit einer Unterseite eines Halsrings einer Flasche aus Kunststoff wechselwirken (sich darin eindrücken) und eine Drehung der Flasche relativ zum Haltelement 10 verhindert. Nach einem anderen Beispiel kann der Halsring einer Flasche über einen Klemmmechanismus der Halteplatte mit der Halteplatte gekoppelt werden, um eine relative Drehung zueinander zu verhindern.

In Figur 1B ist außerdem ein Kraftsensor 43 abgedeuted, der hier zwischen den Spikes 11 so angeordnet ist, dass er die in vertikaler Richtung wirkende Kraft KV beim Aufschraubvorgang messen kann. Dieser Sensor könnte auch an anderen geeigneten Stellen angeordnet sein und ist nicht auf die Form des dargestellten Ausführungsbeispiels beschränkt. Indessen könnte er bei dieser Ausführungsform z.B auch im Zeigerelement 41 integriert sein, d.h, das Zeigerelement könnte z.B. mit auf seiner Ober- und/oder Unterseite angebrachten Dehnmessstreifen versehen sein, die eine Ausbiegung des Zeigerelementes nach unten erfassen könnten.

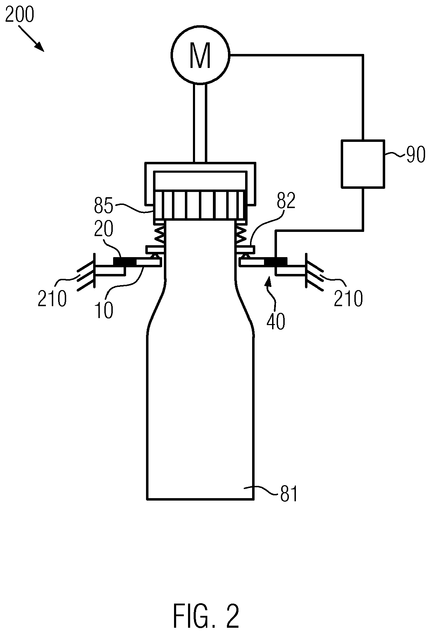

Figur 2 zeigt eine Ausführungsform der erfindungsgemäßen Vorrichtung zum Verschließen einer Flasche.

Diese Ausführungsform der erfindungsgemäßen Vorrichtung 200 zum Verschließen einer Flasche umfasst eine Vorrichtung 100 zum Haltern der zu verschließenden Flasche gemäß der in Figur 1 dargestellten Ausführungsform und eine Regeleinrichtung 90 zum Regeln eines Verschließmoments, das auf einen auf die Flasche aufzuschraubenden Deckel wirkt, basierend auf einem vom Drehmomentsensor 40 ausgegebenen Signal.

Der mit einem Deckel 85 zu verschließende Flaschenkörper 81 wird am Halsring 82 mit dem Halteelement 10 verdrehfest gehaltert. Dabei kann der Boden des Flaschenkörpers 81 insbesondere frei sein, also ohne weitere unterstützende Maßnahmen, so dass die Halterung des Flaschenkörpers lediglich am Halsring 82 erfolgt.

Das Halteelements 10 ist mittels Befestigungselement 20 an einem Bauteil 210 der Flaschenverschließvorrichtung 200 befestigt.

Dabei ist die Regeleinrichtung 90 dazu ausgebildet, das auf den Deckel 85 wirkende Verschließmoment eines Motors M zu reduzieren, wenn das Signal des Drehmomentsensors 40 einen vorbestimmten Grenzwert erreicht oder überschreitet. Auf diese Weise wird ein definiertes Verschließmoment bereitgestellt, so dass ein zu starkes Verschließmoment und ein damit möglicherweise verbundene Schädigung des Gewindes am Deckel 85 und/oder am Flaschenhals vermieden wird. Weiterhin kann auch ein zu niedriges Verschließmoment vermieden werden, um eine nicht ausreichende Dichtigkeit des Verschlusses zu vermeiden.

Zusammenfassend: Die intelligente Spikeplatte (umfassend Halteelement 10, Befestigungselement 20, Drehmomentsensor 40) weist eine Sensorik auf, welche das tatsächlich auf den Verschluss einwirkende Drehmoment erfassen kann. Durch die Krafteinwirkung des Verschließkopfes verformt sich die Spikeplatte über die Stege elastisch im Bereich von einigen hundertstel Millimetern. Durch einen Zeiger wird diese Verformung auf ein durch einen Sensor erfassbares Maß skaliert. Am Ende des Zeigers befindet sich ein Magnettarget. Dem gegenüberliegend befindet sich der Sensor, welcher die Verformung erfasst. Durch die intelligente Spikeplatte wird eine Rückführgröße, nämlich das auf den Verschluss einwirkende Drehmoment, bereitgestellt. Diese kann dann in einem Regelkreis dazu verwendet werden, während des Verschließprozesses das motorseitige Drehmoment so einzustellen, dass am Verschluss genau das gewünschte und über den Verschließprozess konstante Drehmoment bereitgestellt wird.

Die dargestellten Ausführungsformen sind lediglich beispielhaft und der vollständige Umfang der vorliegenden Erfindung wird durch die Ansprüche definiert.

## Patentansprüche

1. Vorrichtung (100) zum Haltern einer zu verschließenden Flasche, umfassend:
ein Halteelement (10) zum in Bezug auf das Haltelement (10) drehfesten Haltern eines Halsrings der zu verschließenden Flasche; und
ein Befestigungselement (20) zum Befestigen des Halteelements (10) an einer Flaschenverschließvorrichtung oder an einer Flaschentransportvorrichtung;
**gekennzeichnet durch**
einen Drehmomentsensor (40) zur Erfassung eines zwischen dem Halteelement (10) und dem Befestigungselement (20) wirkenden Drehmoments;
wobei der Drehmomentsensor (40) umfasst:
ein in Bezug auf das Halteelement (10) drehfestes Zeigerelement (41); und
eine Erfassungseinrichtung (45) zur Erfassung eines Ausschlags des Zeigerelements.

2. Vorrichtung nach Anspruch 1, wobei das Halteelement (10) und das Befestigungselement (20) mittels wenigstens einem Verbindungselement (30) miteinander verbunden sind und das zwischen dem Halteelement (10) und dem Befestigungselement (20) wirkende Drehmoment über das wenigstens eine Verbindungselement (30) übertragen wird.

3. Vorrichtung nach Anspruch 2, wobei das wenigstens eine Verbindungselement (30) eine drehelastische Verbindung zwischen dem Halteelement (10) und dem Befestigungselement (20) bereitstellt.

4. Vorrichtung nach Anspruch 2 oder 3, wobei das wenigstens eine Verbindungselement (30) einen oder mehrere Stege zwischen dem Haltelement (10) und dem Befestigungselement (20) umfasst.

5. Vorrichtung nach einem der Ansprüche 1 bis 4, wobei die Erfassungseinrichtung (45) am Befestigungselement (20) vorgesehen ist.

6. Vorrichtung nach einem der Ansprüche 1 bis 5, wobei das Zeigerelement (41) ein Magnetelement (42) umfasst und die Erfassungseinrichtung (45) einen Magnetfeldsensor (46) aufweist.

7. Vorrichtung (200) zum Verschließen einer Flasche, umfassend:
eine Vorrichtung (100) zum Haltern der zu verschließenden Flasche gemäß einem der Ansprüche 1 bis 6; und
eine Regeleinrichtung (90) zum Regeln eines Verschließmoments, das auf einen auf die Flasche aufzuschraubenden Deckel wirkt, basierend auf einem vom Drehmomentsensor (40) ausgegebenen Signal.

8. Vorrichtung nach Anspruch 7, wobei die Regeleinrichtung (90) dazu ausgebildet ist, das Verschließmoment zu reduzieren, wenn das Signal einen vorbestimmten Grenzwert erreicht oder überschreitet.

9. Vorrichtung nach wenigstens einem der vorangegangenen Ansprüche, **dadurch gekennzeichnet, dass** ein Sensor (43) vorgesehen ist, der die in vertikaler Richtung auf die zu verschraubende Flasche wirkende Kraft KV misst.

10. Verfahren zum Verschließen einer Flasche, umfassend die Schritte:
Haltern eines Halsrings der zu verschließenden Flasche mit einem ein Halteelement (10), wobei das Haltern in Bezug auf das Halteelement drehfest erfolgt, und wobei das Halteelement mit einem Befestigungselement (20) an einer Flaschenverschließvorrichtung befestigt ist;
**gekennzeichnet durch**
Erfassen eines zwischen dem Halteelement (10) und dem Befestigungselement (20) wirkenden Drehmoments;
wobei das Erfassen des Drehmoments das Erfassen einer Verdrehung des Halteelements (10) in Bezug auf das Befestigungselement (20) umfasst; und
wobei das Erfassen der Verdrehung ein Erfassen der Lageänderung eines am Halteelement (10) angeordneten Zeigerelements (41) umfasst.

11. Verfahren nach Anspruch 10 mit dem weiteren Schritt:
Regeln eines Verschließmoments, das auf einen auf die Flasche aufzuschraubenden Deckel wirkt, basierend auf einem Signal, das von einem das Drehmoment erfassenden Drehmomentsensor (40) ausgegeben wird.

12. Verfahren nach Anspruch 11, wobei das Regeln ein Reduzieren des Verschließmoments umfasst, wenn das Signal einen vorbestimmten Grenzwert erreicht oder überschreitet.

13. Verfahren nach einem der Ansprüche 10 bis 12, wobei das Erfassen der Lageänderung des Zeigerelements ein Erfassen eines Magnetfelds eines am Zeigerelement angeordneten Magnetelements mit einem am Halteelement angeordneten Magnetfeldsensor umfasst.

14. Verfahren nach wenigstens einem der Ansprüche 10 bis 13, **dadurch gekennzeichnet, dass** auch die senkrecht auf die zu verschließende Flasche beim Verschließen aufgebrachte Kraft gemessen wird.

## Claims

1. A device (100) for holding a bottle to be closed, comprising:
a holding element (10) for holding, in a rotationally fixed manner with respect to the holding element (10), a neck ring of the bottle to be closed; and
a fastening element (20) for fastening the holding element (10) to a bottle closing device or to a bottle transport device;
**characterized by**
a torque sensor (40) for detecting a torque acting between the holding element (10) and the fastening element (20);
wherein the torque sensor (40) comprises:
a pointer element (41) that is rotationally fixed with respect to the holding element (10); and
a detection unit (45) for detecting a deflection of the pointer element.

2. The device according to claim 1, wherein the holding element (10) and the fastening element (20) are interconnected by means of at least one connecting element (30) and the torque acting between the holding element (10) and the fastening element (20) is transmitted via the at least one connecting element (30).

3. The device according to claim 2, wherein the at least one connecting element (30) provides a torsionally flexible connection between the holding element (10) and the fastening element (20).

4. The device according to claim 2 or 3, wherein the at least one connecting element (30) comprises one or a plurality of webs between the holding element (10) and the fastening element (20).

5. The device according to one of the claims 1 to 4, wherein the detection unit (45) is provided on the fastening element (20).

6. The device according to one of the claims 1 to 5, wherein the pointer element (41) comprises a magnetic element (42), and the detection unit (45) comprises a magnetic field sensor (46).

7. A device (200) for closing a bottle, comprising:
a device (100) for holding the bottle to be closed according to one of the claims 1 to 6; and
a control unit (90) for controlling a closing torque acting on a cap to be screwed onto the bottle, based on a signal outputted by the torque sensor (40).

8. The device according to claim 7, wherein the control unit (90) is configured to reduce the closing torque, when the signal reaches or exceeds a predetermined limit value.

9. The device according to at least one of the preceding claims, **characterized in that** a sensor (43) is provided, which measures the force KV acting in a vertical direction on the bottle undergoing the screw-on process.

10. A method for closing a bottle, comprising the following steps:
holding, by means of a holding element (10), a neck ring of the bottle to be closed, the holding taking place in a rotationally fixed manner with respect to the holding element, and the holding element being fastened to a bottle closing device by a fastening element (20);
**characterized by**
detecting a torque which acts between the holding element (10) and the fastening element (20);
wherein detecting the torque comprises detecting a rotational displacement of the holding element (10) with respect to the fastening element (20); and
wherein detecting the rotational displacement comprises detecting the change of position of a pointer element (41) arranged on the holding element (10).

11. The method according to claim 10, further comprising the step of:
controlling a closing torque acting on a cap to be screwed onto the bottle, based on a signal outputted by a torque sensor (40) which detects the torque.

12. The method according to claim 11, wherein the controlling comprises a reduction of the closing torque, when the signal reaches or exceeds a predetermined limit value.

13. The method according to one of the claims 10 to 12, wherein detecting the change of position of the pointer element comprises detecting a magnetic field of a magnetic element arranged on the pointer element by means of a magnetic field sensor arranged on the holding element.

14. The method according to at least one of the claims 10 to 13, **characterized in that** also the force applied during the closing process perpendicularly to the bottle to be closed is measured.

## Revendications

1. Dispositif (100) pour maintenir une bouteille à fermer, comprenant :
un élément de maintien (10) pour maintenir de manière solidaire en rotation, par rapport à l'élément de maintien (10), une bague de col de la bouteille à fermer ; et
un élément de fixation (20) pour fixer l'élément de maintien (10) à un dispositif de fermeture de bouteille ou à un dispositif de transport de bouteille ;
**caractérisé par**
un capteur de couple (40) pour détecter un couple agissant entre l'élément de maintien (10) et l'élément de fixation (20) ;
dans lequel le capteur de couple (40) comprend :
un élément pointeur (41) solidaire en rotation par rapport à l'élément de maintien (10) ; et
un dispositif de détection (45) pour détecter une déviation de l'élément pointeur.

2. Dispositif selon la revendication 1, dans lequel l'élément de maintien (10) et l'élément de fixation (20) sont reliés l'un à l'autre au moyen d'au moins un élément de liaison (30) et le couple agissant entre l'élément de maintien (10) et l'élément de fixation (20) est transmis par l'intermédiaire du au moins un élément de liaison (30).

3. Dispositif selon la revendication 2, dans lequel le au moins un élément de liaison (30) fournit une liaison élastique en rotation entre l'élément de maintien (10) et l'élément de fixation (20).

4. Dispositif selon la revendication 2 ou 3, dans lequel l'au moins un élément de liaison (30) comprend une ou plusieurs nervures entre l'élément de maintien (10) et l'élément de fixation (20).

5. Dispositif selon l'une quelconque des revendications 1 à 4, dans lequel le dispositif de détection (45) est prévu au niveau de l'élément de fixation (20).

6. Dispositif selon l'une quelconque des revendications 1 à 5, dans lequel l'élément pointeur (41) comprend un élément magnétique (42) et le dispositif de détection (45) comprend un capteur de champ magnétique (46).

7. Dispositif (200) pour fermer une bouteille, comprenant :
un dispositif (100) pour maintenir la bouteille à fermer selon l'une quelconque des revendications 1 à 6 ; et
un dispositif de régulation (90) pour réguler un couple de fermeture agissant sur un couvercle à visser sur la bouteille, sur la base d'un signal délivré en sortie par le capteur de couple (40).

8. Dispositif selon la revendication 7, dans lequel le dispositif de régulation (90) est conçu pour réduire le couple de fermeture lorsque le signal atteint ou dépasse une valeur limite prédéterminée.

9. Dispositif selon au moins l'une des revendications précédentes, **caractérisé en ce qu'**un capteur (43) est prévu, qui mesure la force KV agissant dans une direction verticale sur la bouteille à visser.

10. Procédé pour fermer une bouteille, comprenant l'étape consistant à :
maintenir une bague de col de la bouteille à fermer avec un élément de maintien (10), dans lequel le maintien à lieu de manière solidaire en rotation par rapport à l'élément de maintien, et dans lequel l'élément de maintien est fixé à un dispositif de fermeture de bouteille par l'intermédiaire d'un élément de fixation (20) ;
**caractérisé par** l'étape consistant à
détecter un couple agissant entre l'élément de maintien (10) et l'élément de fixation (20) ;
dans lequel la détection du couple comprend la détection d'un déplacement angulaire de l'élément de maintien (10) par rapport à l'élément de fixation (20) ; et
dans lequel la détection du déplacement angulaire comprend une détection du changement de position d'un élément pointeur (41) agencé au niveau de l'élément de maintien (10).

11. Procédé selon la revendication 10, comprenant en outre l'étape consistant à :
réguler un couple de fermeture agissant sur un couvercle à visser sur la bouteille, sur la base d'un signal émis par un capteur de couple (40) détectant le couple.

12. Procédé selon la revendication 11, dans lequel la régulation comprend une réduction du couple de fermeture lorsque le signal atteint ou dépasse une valeur limite prédéterminée.

13. Procédé selon l'une quelconque des revendications 10 à 12, dans lequel la détection du changement de position de l'élément pointeur comprend une détection d'un champ magnétique d'un élément magnétique agencé au niveau de l'élément pointeur à l'aide d'un capteur de champ magnétique agencé au niveau de l'élément de maintien.

14. Procédé selon au moins l'une des revendications 10 à 13, **caractérisé en ce que** la force appliquée perpendiculairement à la bouteille à fermer est également mesurée lors de la fermeture.
